# EUROPÄISCHE PATENTSCHRIFT

(11) **EP 2 580 094 B1**
(45) Veröffentlichungstag und Bekanntmachung des Hinweises auf die Patenterteilung: **26.02.2014**
(21) Anmeldenummer: 11716865.8
(22) Anmeldetag: 15.04.2011
(51) Int. Cl.: B60R 21/00, G07C 5/00

(54) **VERFAHREN ZUM AUSGEBEN EINER BERGUNGSRELEVANTEN INFORMATION SOWIE SYSTEM**
METHOD AND SYSTEM FOR GIVING RESCUE RELETAD INFORMATION
SYSTÈME ET MÉTHODE POUR RENDRE DES INFORMATION RELATÉ À LA SAUVETAGE

(30) Priorität: 08.06.2010 DE 102010029811
(43) Veröffentlichungstag der Anmeldung: 17.04.2013
(73) Patentinhaber: Robert Bosch GmbH, 70442 Stuttgart (DE)
(72) Erfinder: BLASCHKE, Volker, 71642 Ludwigsburg (DE); ROHATSCHEK, Andreas-Juergen, 73249 Wernau/Neckar (DE); SCHROFF, Clemens, 76703 Kraichtal (DE)
(86) Internationale Anmeldenummer: PCT/EP2011/055993
(87) Internationale Veröffentlichungsnummer: WO 2011/154187

(56) Entgegenhaltungen:
- DE-A1- 4 437 339
- DE-A1- 10 338 759
- DE-A1-102005 026 517
- DE-U1-202004 013 532
- US-A1- 2004 142 678

## Beschreibung

### Stand der Technik

Die vorliegende Erfindung betrifft ein Verfahren zum Ausgeben einer bergungsrelevanten Information sowie ein System.

Ein solcher Verfahren wird in DE 10338759 gemäß Oberbegriff der Anspruchs 1 beschrieben.

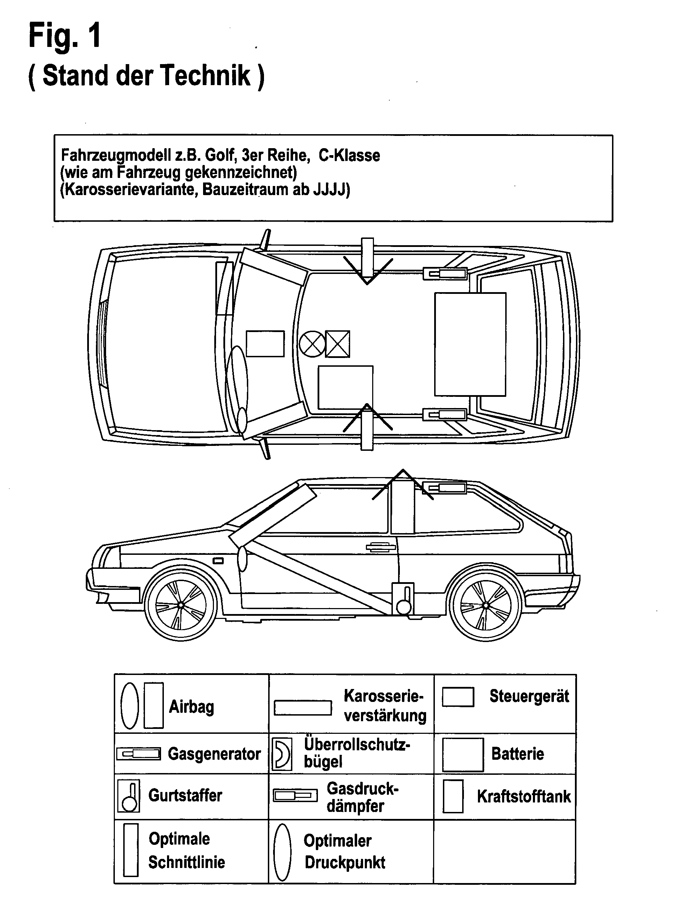

Beispielsweise beschreibt der am 10. Februar 2010 auf der Website des ADAC (www.adac.de) zugängliche Artikel "Die Rettungskarte" Bestrebungen auf dem Automobilsektor, Kraftfahrzeuge mit einer Rettungskarte vorzusehen. Diese Rettungskarte enthält bergungsrelevante Informationen, welche die Bergung einer in dem Kraftfahrzeug verunfallten Person vereinfachen, insbesondere die Rettungszeit verkürzen sollen. Derartige bergungsrelevante Informationen sind beispielsweise die Stellen der Karosserie, an welchen Spreizer oder Scheren anzusetzen sind oder auch die Benennung von Vorsichtsmaßnahmen, die nötig sind, um Airbags nicht nachträglich auszulösen. Eine derartige Rettungskarte ist beispielhaft in Fig. 1 dargestellt. Die Rettungskarte soll beispielsweise hinter der Fahrersonnenblende angebracht sein.

### Offenbarung der Erfindung

Das in Anspruch 1 definierte, erfindungsgemäße Verfahren zum Ausgeben einer bergungsrelevanten Information sowie das in Anspruch 8 definierte, erfindungsgemäße System bieten gegenüber herkömmlichen Lösungen den Vorteil, dass die bergungsrelevanten Informationen automatisiert auf einem mobilen Gerät der die Rettung durchführenden oder steuernden Person angezeigt werden können. Damit ist es nicht mehr notwendig, eine Rettungskarte in Papierform in dem Kraftfahrzeug mitzuführen. Auch der Zugriff auf die bergungsrelevante Information gestaltet sich erfindungsgemäß sehr einfach, da kein physisches Eindringen in das Kraftfahrzeug mehr erforderlich ist, um an die bergungsrelevanten Informationen zu kommen.

Die in den jeweiligen Unteransprüchen aufgeführten Merkmale beziehen sich auf vorteilhafte Weiterbildungen und Verbesserungen des Gegenstands der Erfindung.

### Kurze Beschreibung der Zeichnungen

Ausführungsbeispiele der Erfindung sind in der Zeichnung dargestellt und in der nachfolgenden Beschreibung näher erläutert.

Es zeigen
- Fig. 1: eine aus dem Stand der Technik bekannte Rettungskarte;
- Fig. 2: ein System gemäß einem Ausführungsbeispiel der Erfindung; und
- Fig. 3: das mobile Gerät aus Fig. 2 in einer Detailansicht.

### Ausführungsformen der Erfindung

In den Figuren bezeichnen gleiche Bezugszeichen gleiche oder funktionsgleiche Elemente, soweit nichts Gegenteiliges angegeben ist.

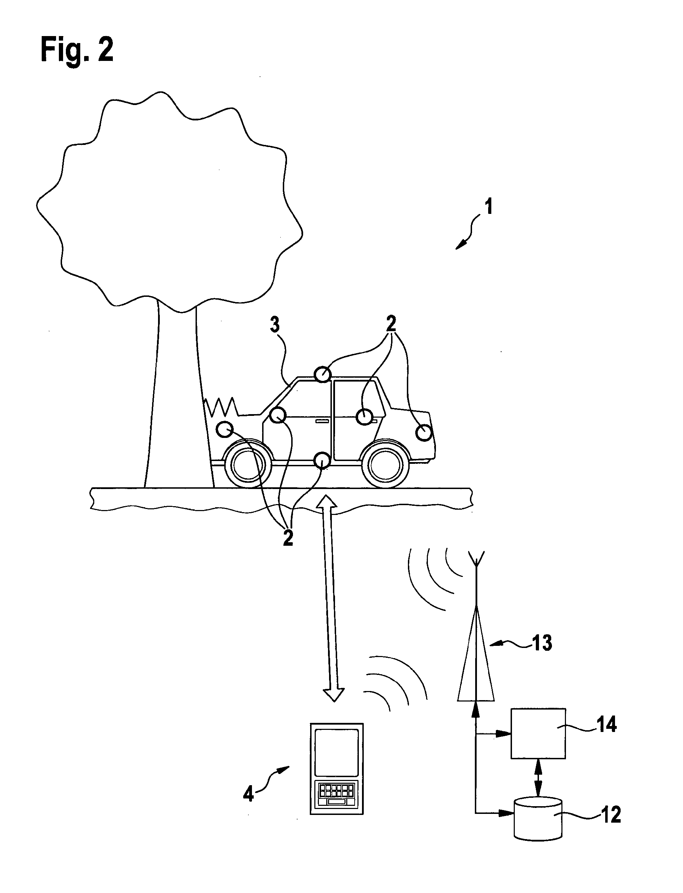

Fig. 2 zeigt ein System 1 gemäß einem Ausführungsbeispiel der vorliegenden Erfindung.

Das System 1 weist ein ein oder mehrere Informationsträger 2 umfassendes Kraftfahrzeug 3 auf. Die Informationsträger 2 sind also an dem Kraftfahrzeug befestigt. "An dem Kraftfahrzeug" umfasst vorliegend auch das Vorsehen der Informationsträger 2 in dem Kraftfahrzeug 3.

Gemäß dem vorliegenden Ausführungsbeispiel handelt es sich bei den Informationsträgern 2 beispielsweise um eine Vielzahl von RFID-Chips, welche über das Kraftfahrzeug verteilt angebracht sind. Diese können beispielsweise innerhalb und/oder außerhalb der Fahrgastzelle, in dem Kofferraum, im Motorraum und/oder in oder an dem Boden des Kraftfahrzeugs 3 angebracht sein. Diese Vielzahl von über das Kraftfahrzeug 3 verteilten Informationsträgern 2 stellt sicher, dass wenigstens einer dieser Informationsträger 2 bei einem Unfall, wie in Fig. 2 dargestellt, erhalten bleibt, das heißt nicht zerstört wird.

Jeder der Informationsträger 2 enthält bevorzugt die gleichen Informationen, welche bergungsrelevante Informationen charakterisieren. "Bergungsrelevante Informationen" sind vorliegend solche Informationen, welche für die Bergung einer verunfallten Person von Bedeutung sind. Zu diesen Informationen zählen beispielsweise Informationen über aktive Sicherheitssysteme, also beispielsweise die Anordnung der Airbags in dem Kraftfahrzeug, Informationen über passive Sicherheitssysteme, also beispielsweise die Anordnung eines Seitenaufprallschutzes in dem Kraftfahrzeug, Informationen über den im Kraftfahrzeug mitgeführten Kraftstoff, also beispielsweise Gas oder Wasserstoff, und/oder Informationen über eine Sonderausführung, beispielsweise eine Sonderverglasung, des Kraftfahrzeugs. Mit "Kraftfahrzeug" ist hier ein individuelles Kraftfahrzeug oder ein Kraftfahrzeugmodell gemeint. Für Fahrzeughersteller bietet es sich besonders an, für mehrere Kraftfahrzeuge eines jeweiligen Kraftfahrzeugmodells immer die gleichen, die bergungsrelevanten Informationen charakterisierenden Informationen auf dem Informationsträger 2 zu hinterlegen.

Dabei werden die Informationen in elektronischer Form auf dem Informationsträger gespeichert. Dies ist insbesondere für den Fahrzeughersteller vorteilhaft, da dieser somit den gleichen Informationsträger für unterschiedliche Kraftfahrzeuge oder unterschiedliche Kraftfahrzeugmodelle mit unterschiedlichen, bergungsrelevanten Informationen einsetzen kann.

Bei den Informationen, welche die bergungsrelevanten Informationen charakterisieren, kann es sich um die bergungsrelevanten Informationen, wie vorstehend definiert, selbst handeln. Genauso, und dies wird vorliegend bevorzugt, können die Daten eine Zuordnung von bergungsrelevanten Informationen zu dem jeweiligen Kraftfahrzeug oder Kraftfahrzeugmodell erlauben. Damit müssen vorteilhaft nur wenige Informationen auf dem Informationsträger gespeichert werden.

Das System 1 weist ferner ein mobiles Gerät 4 auf. Dieses Gerät 4 erlaubt das Anzeigen der bergungsrelevanten Informationen in Abhängigkeit von den aus dem Informationsträger 2 ausgelesenen Informationen.

In diesem Zusammenhang bestehen mehrere Möglichkeiten:
Beispielsweise kann das mobile Gerät 4 drahtlos mit den Informationsträgern 2 in Form von RFID-Chips kommunizieren, wobei die Informationen, welche die bergungsrelevanten Informationen charakterisieren, an das mobile Gerät 4 übermittelt werden.

Darüber hinaus ist es auch denkbar, dass eine Benutzerperson die bergungsrelevante Information manuell oder über Spracherkennung in das mobile Gerät 4 eingibt.

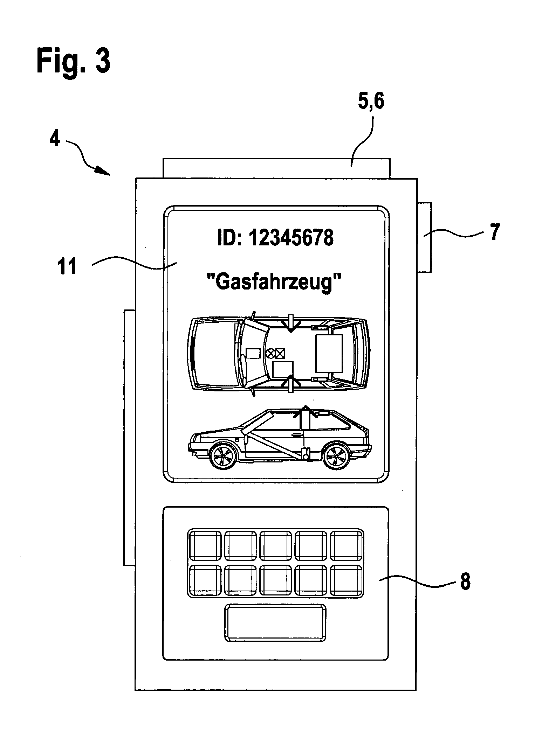

Entsprechend kann das mobile Gerät 4, wie in Fig. 3 dargestellt, einen Barcode-Leser 5, einen RFID-Leser 6, eine Sende-/Empfangsantenne 7 und/oder ein Bedienfeld 8 aufweisen.

Für den Fall, dass auf dem Informationsträger 2 die Informationen gespeichert sind, welche die bergungsrelevanten Informationen selbst beschreiben, können diese einfach an das mobile Gerät 4 übermittelt werden und der die Rettung durchführenden oder steuernden Person dargestellt werden.

Die bergungsrelevanten Informationen können auf dem mobilen Gerät 4 beispielsweise auf einem Bildschirm 11 desselben dargestellt werden, siehe Fig. 3. Die Darstellung entspricht dabei im Wesentlichen der aus Fig. 1 bekannten Darstellung. Die bergungsrelevanten Informationen können als Text-, Bild- oder Videodaten von dem mobilen Gerät 4 wiedergegeben werden. Beispielsweise ist die Darstellung eines Videos zur Führung eines Schnitts mit einer entsprechenden Säge durch das Kraftfahrzeug 3 denkbar. Weiterhin könnten die bergungsrelevanten Daten auch in Form einer Sprachausgabe von dem mobilen Gerät 4 ausgegeben werden.

Vorliegend wird eine Lösung bevorzugt, bei welcher, wie bereits vorstehend ausgeführt, lediglich eine Information von dem Informationsträger 2 an das mobile Gerät 4 übermittelt wird, welches eine Zuordnung der bergungsrelevanten Informationen zu dem entsprechenden Kraftfahrzeug 3 oder Kraftfahrzeugmodell ermöglicht. Diese Art von Information wird vorliegend als "Identifikationskennzeichen" bezeichnet.

Gemäß einem Ausführungsbeispiel der Erfindung könnte auf dem mobilen Gerät 4 eine Datenbank gespeichert sein. Diese Datenbank enthält für die verschiedenen Kraftfahrzeugtypen, welche jeweils über ihr Identifikationskennzeichen in der Datenbank identifiziert sind, entsprechende bergungsrelevante Informationen. Wird nun das Identifikationskennzeichen von dem Informationsträger 2 an das mobile Gerät 4 übermittelt, wird auf dem Bildschirm 11 der zu dem Identifikationszeichen gehörende Datensatz dargestellt. Dies ist in Fig. 3 beispielhaft illustriert: Der Bildschirm 11 des mobilen Geräts 4 zeigt das Identifikationskennzeichen "ID 12345678" des Kraftfahrzeugs 3 sowie diesem Identifikationskennzeichen zugeordnete bergungsrelevante Informationen an.

Das mobile Gerät 4 kann dazu eingerichtet sein, dass eine Aktualisierung der Datenbank möglich ist. Dies kann beispielsweise durch Anschluss des mobilen Geräts 4 über beispielsweise RS232, Ethernet, Bluetooth, WLAN, USB oder Mobilfunk an eine zentrale Datenbank 12 geschehen. Besonders bevorzugt wird eine Ausgestaltung, bei welcher das mobile Gerät 4 eine Funkverbindung 13 zu der Datenbank 12 aufbauen kann.

Gemäß einem weiteren, vorliegend bevorzugten Ausführungsbeispiel weist das mobile Gerät 4 selbst keine Datenbank, sondern lediglich einen internen Datenspeicher auf. In diesem Fall fragt das mobile Gerät 4 auf Basis des Identifikationskennzeichens insbesondere über die Funkverbindung 13 die zentrale Datenbank 12 ab, welche daraufhin dem mobilen Gerät 4 bevorzugt wiederum über die Funkverbindung 13 den dem Identifikationskennzeichen zugeordneten Datensatz übermittelt. Das mobile Gerät 4 stellt sodann diesen Datensatz 4, welcher in dem genannten internen Datenspeicher des mobilen Geräts 4 gespeichert wird, auf dem Bildschirm 11 dar.

Die Datenbank 12 kann Teil eines Kommunikationsnetzwerks sein, beispielsweise des Internets. Die Datenbank 12 wird bevorzugt von den entsprechenden Automobilherstellern regelmäßig aktualisiert.

Die Funkverbindung 13 kann beispielsweise Bestandteil eines Mobilfunknetzes sein.

Das System 1 kann ferner eine weitere Datenbank 14 aufweisen. In der Datenbank 14 können speziell von Rettungskräften gesammelte bergungsrelevante Informationen, welche jeweils ebenfalls über ein Identifizierungskennzeichen einem jeweiligem Kraftfahrzeugtyp zugeordnet sind, abgelegt werden. Diese zusätzliche Datenbank 14 kann beispielsweise einer Einsatzzentrale der Feuerwehr zugeordnet sein, das heißt, die Daten in der Datenbank 14 werden von der Feuerwehr eingepflegt. Selbstverständlich könnten die Datenbanken 12 und 14 ineinander integriert sein.

Das vorstehend beschriebene System sowie das vorstehend beschriebene Verfahren erlauben somit eine schnellere, automatisierte Bereitstellung von bergungsrelevanten Informationen an Rettungskräfte, so dass eine Bergung der verunfallten Person vereinfacht, insbesondere beschleunigt werden kann.

Die Ausgestaltung mit der zentralen Datenbank 12 erlaubt vorteilhaft, dass auch nachträglich, das heißt nach Auslieferung des Kraftfahrzeugs 3 durch den Automobilhersteller, bergungsrelevante Informationen abgelegt werden können. Außerdem könnten durch den Halter des Kraftfahrzeugs 3 bei einer Nachrüstung desselben, beispielsweise mit einem Gasantrieb, die entsprechenden bergungsrelevanten Informationen in der Datenbank 12 abgelegt werden.

Die als RFID-Chips ausgebildeten Informationsträger 2 könnten auch in Airbag-Komponenten integriert werden.

Obwohl die Erfindung anhand von Ausführungsbeispielen vorliegend konkret beschrieben wurde, ist sie darauf nicht beschränkt, sondern auf vielfältige Art und Weise modifizierbar. Insbesondere sind die vorliegend für das erfindungsgemäße System beschriebenen Weiterbildungen und Ausführungsbeispiele entsprechend auf das erfindungsgemäße Verfahren anwendbar, und umgekehrt. Ferner sei darauf hingewiesen, dass "ein" keine Mehrzahl ausschließt.

## Patentansprüche

1. Verfahren zum Ausgeben einer bergungsrelevanten Information, welches die folgenden Schritte aufweist:
Auslesen eines Informationsträgers (2) an einem Fahrzeug (3), welcher Informationen enthält, die bergungsrelevante Informationen charakterisieren; und
Anzeigen der bergungsrelevanten Informationen auf einem mobilen Gerät (4) in Abhängigkeit von den ausgelesenen Informationen;
**dadurch gekennzeichnet, dass** die Informationen, welche bergungsrelevante Informationen charakterisieren, drahtlos von dem Informationsträger (2) in das mobile Gerät (4) eingelesen werden; und
mehrere als RFID-Chips ausgebildete Informationsträger (2), welche jeweils die Informationen enthalten, über das Fahrzeug (3) verteilt angebracht sind.

2. Verfahren nach Anspruch 1, wobei die ausgelesenen Informationen die bergungsrelevanten Informationen selbst enthalten.

3. Verfahren nach Anspruch 2, wobei der Informationsträger (2) als ein Datenspeicher ausgebildet ist und die bergungsrelevanten Informationen selbst auf dem Datenspeicher gespeichert sind.

4. Verfahren nach Anspruch 1, wobei eine Datenbank (12; 14), welche die bergungsrelevanten Informationen enthält, in Abhängigkeit von den aus dem Informationsträger (2) ausgelesenen Informationen ausgelesen wird.

5. Verfahren nach Anspruch 4, wobei die Datenbank (12; 14) auf dem mobilen Gerät gespeichert ist.

6. Verfahren nach einem der Ansprüche 4 bis 5, wobei die Datenbank als eine zentrale Datenbank (12; 14) ausgebildet ist, welche die bergungsrelevanten Informationen insbesondere drahtlos an das mobile Gerät (4) übermittelt.

7. Verfahren nach einem der vorhergehenden Ansprüche, wobei die bergungsrelevanten Informationen Informationen über aktive Sicherheitssysteme, passive Sicherheitssysteme, den Kraftstoff und/oder eine Verglasung des Fahrzeugs (3) enthalten.

8. System (1), aufweisend:
mehrere als RFID-Chips ausgebildete Informationsträgers (2), die über ein Fahrzeug (3) verteilt angebracht sind, welche jeweils Informationen enthalten, die bergungsrelevante Informationen charakterisieren; und
ein mobiles Gerät (4) zum Auslesen der Informationen und zum Anzeigen der bergungsrelevanten Informationen.

## Claims

1. Method for outputting a piece of rescue-relevant information, which has the following steps:
an information storage medium (2) on a vehicle (3), which information storage medium contains information that characterizes rescue-relevant information, is read; and
the rescue-relevant information is displayed on a mobile appliance (4) on the basis of the read information;
**characterized in that** the information that characterizes rescue-relevant information is read into the mobile appliance (4) wirelessly from the information storage medium (2); and
a plurality of information storage media (2) that are in the form of RFID chips and that each contain the information are fitted in a manner distributed over the vehicle (3).

2. Method according to Claim 1, wherein the read information contains the rescue-relevant information itself.

3. Method according to Claim 2, wherein the information storage medium (2) is in the form of a data storage medium and the rescue-relevant information itself is stored on the data storage medium.

4. Method according to Claim 1, wherein a database (12; 14) that contains the rescue-relevant information is read on the basis of the information read from the information storage medium (2).

5. Method according to Claim 4, wherein the database (12; 14) is stored on the mobile appliance.

6. Method according to either of Claims 4 and 5, wherein the database is in the form of a central database (12; 14) that transmits the rescue-relevant information to the mobile appliance (4) wirelessly in particular.

7. Method according to one of the preceding claims, wherein the rescue-relevant information contains information about active safety systems, passive safety systems, the fuel and/or glazing on the vehicle (3).

8. System (1) having:
a plurality of information storage media (2) that are in the form of RFID chips and that are fitted in a manner distributed over a vehicle (3) and each contain information that characterizes rescue-relevant information; and
a mobile appliance (4) for reading the information and for displaying the rescue-relevant information.

## Revendications

1. Procédé pour délivrer une information pertinente pour un sauvetage, lequel présente les étapes suivantes :
lecture d'un support d'informations (2) sur un véhicule (3), lequel contient des informations qui caractérisent les informations pertinentes pour un sauvetage ; et
affichage des informations pertinentes pour un sauvetage sur un appareil mobile (4) en fonction des informations lues ;
**caractérisé en ce que** les informations qui caractérisent les informations pertinentes pour un sauvetage sont chargées sans fil depuis le support d'informations (2) dans l'appareil mobile (4) ; et
plusieurs supports d'informations (2) réalisés sous la forme de puces RFID, lesquels contiennent à chaque fois les informations, sont disposés répartis sur le véhicule (3).

2. Procédé selon la revendication 1, selon lequel les informations lues contiennent les informations pertinentes pour un sauvetage elles-mêmes.

3. Procédé selon la revendication 2, selon lequel le support d'informations (2) est réalisé sous la forme d'une mémoire de données et les informations pertinentes pour un sauvetage elles-mêmes sont enregistrées sur la mémoire de données.

4. Procédé selon la revendication 1, selon lequel une base de données (12 ; 14), laquelle contient les informations pertinentes pour un sauvetage, est lue en fonction des informations lues depuis le support d'informations (2).

5. Procédé selon la revendication 4, selon lequel la base de données (12 ; 14) est enregistrée sur l'appareil mobile.

6. Procédé selon l'une des revendications 4 à 5, selon lequel la base de données est réalisée sous la forme d'une base de données centrale (12 ; 14) qui communique notamment sans fil les informations pertinentes pour un sauvetage à l'appareil mobile (4).

7. Procédé selon l'une des revendications précédentes, selon lequel les informations pertinentes pour un sauvetage contiennent des informations sur les systèmes de sécurité actifs, les systèmes de sécurité passifs, le carburant et/ou le vitrage du véhicule (3).

8. Système (1), présentant :
plusieurs supports d'informations (2) réalisés sous la forme de puces RFID qui sont disposés répartis sur un véhicule (3), lesquels contiennent à chaque fois des informations qui caractérisent des informations pertinentes pour un sauvetage ; et
un appareil mobile (4) pour lire les informations et pour afficher les informations pertinentes pour un sauvetage.
